# EUROPEAN PATENT SPECIFICATION

(11) **EP 0 502 970 B1**
(45) Date of publication and mention of the grant of the patent: **09.08.1995**
(21) Application number: 91900858.1
(22) Date of filing: 29.11.1990
(51) Int. Cl.: B01D 53/38

(54) **EXHAUST GAS CONDITIONING**
BEHANDLUNG VON ABGAS
TRAITEMENT DES GAZ D'ECHAPPEMENT

(30) Priority: 02.12.1989 GB 8927314
(43) Date of publication of application: 16.09.1992
(73) Proprietor: BOC LIMITED, Windlesham, Surrey GU20 6HJ (GB)
(72) Inventor: SMITH, James, Robert, Nailsea Bristol BS19 1JW (GB); TIMMS, Peter, Leslie, Bristol BS6 7EQ (GB)
(74) Representative: Bousfield, Roger James
(86) International application number: GB9001862
(87) International publication number: WO9108041

(56) References cited:
- EP-A- 0 280 585
- EP-A- 0 303 368
- EP-A- 0 384 802
- WO-A-89/11905
- DE-A- 3 432 033
- GB-A- 2 163 364
- US-A- 3 845 191
- US-A- 3 980 755
- US-A- 4 535 072
- Patent Abstracts of Japan, vol. 11, no. 38 (C-401)(2485), 4 February 1987; &JP-A-61204025 (CENTRAL GLASS CO. LTD) 10 September 1986

## Description

The purpose of the invention is to convert certain hazardous gaseous effluents by chemical reaction into a form which makes their subsequent removal from the gas stream possible. The hazardous gases used here may be hard to remove from effluent gas stream by existing techniques, or the existing techniques are limited by the other constituents of the gas stream. Alternatively the material to be destroyed may be in a concentrated form, having been collected for disposal.

The gaseous effluents can be gases that contain chlorocarbons and/or chloroflurocarbons (CFCs) from a large variety of industrial processes, for example semi-conductor processing, CFC cleaning baths, fire fighting equipment filling or discharge, aerosol filling or discharge refrigeration applications, expanded foam production etc. The gaseous effluents may also contain chloroaromatics for instance resulting from the incineration of materials such as PVC and PCBs etc. Such effluent gases may well coexist in the exhaust stream with sulphur dioxide, hydrochloric acid gas, carbon dioxide, nitrogen, oxygen and others.

In accordance with the invention, there is provided a method treating effluent gases from an industrial process which includes exposing the gases in sequential order to:
a first reaction stage comprising a magnesium or calcium material consisting of an oxide, carbonate or hydroxide, or a mixture thereof, and
a second reaction stage comprising a silicon material in the form of silicon or a silicon rich alloy or substances at an elevated temperature.

As such, the invention involves introducing a quantity of magnesium oxide or calcium oxide or magnesium carbonate or calcium carbonate or magnesium hydroxide or calcium hydroxide or a material containing these materials to the inlet side of a bed containing the silicon material. The magnesium oxide or calcium oxide material is preferably heated to a temperature of 350 to 800°C and preferably from 450 to 600°C. This magnesium oxide or calcium oxide material reacts with many acids and acts as a filter for contaminants to reach and poison the silicon surface.

A further advantage of the presence of magnesium oxide or calcium oxide bed held at elevated temperature is the disassociation of some gas species on hot base materials. Hydrogen selinide, silane and dichlorosilane will decompose on base materials held at elevated temperatures while other hydrides such as arsine, phosphine and diborane thermally decompose on the same surface.

The invention also involves subsequently exposing the effluent gases to silicon or silicon rich alloys or substances, specifically but not exclusively, manganese-silicon alloys, ferro-silicon alloys and commercially pure silicon, at an elevated temperature, preferably from 300 to 900°C and more preferably from 450 to 550 or 650°C.

The effect of the passage of C-Cl or CFCs or organo-chlorine compounds (both aromatic and aliphatic) through a bed of hot silicon is that the gases react with the silicon to form silicon tetra-halide(s). These resultant mixture of gases being more reactive and much more readily removed by subsequent chemical reaction stages, or reaction with water in a water/aqueous solution scrubber. The resultant gas mixture from the silicon stage may also be reacted with magnesium oxide or calcium oxide (WO-A-89/11905, published 14.12.89).

In our experiments, we showed that when air containing chlorobenzene at a significant level is passed through a bed of silicon at elevated temperature (up to 600°C) the chlorobenzene reacted with silicon and the toxic products were removed by a subsequent stage. The silicon surface did not passivate; no detectable carbon, carbide film was detected. Where it is required to pass carbon-halide compounds in the absence of air over a similar bed we have found that silicon carbide is formed. This carbide is also effective in reacting with the incoming vapours, but blinding will eventually reduce the effectiveness of the silicon bed.

The use of ferro-silicon alloys overcomes this problem in part by the iron reacting with carbon on the surface of the ferro silicon, reducing the rate of blinding of the surface. The presence of oxygen also removed carbon deposits while the oxides of silicon and iron retain adequately reactivity at these temperatures.

The treated gases may be then further treated by means of wet scrubbers or other known technology.

The method of the invention is particularly useful for effluent gases including one or more of a chlorocarbon, a chloroflurocarbon, an organo-halogen compound or an organo-sulphur compound.

The silicon treatment aspect of the invention is particularly effective for chloroflurocarbons, organo-halogens compounds and organo-sulphur compounds eg. dichloroethyl sulphide (mustard gas). In particular, that vapour of chlorocarbons/chloroflurocarbons passed over a preheated bed of silicon or silicon rich alloy as above will react to form products that are largely vapours that can be readily removed in a subsequent reaction stage. Organo-chlorine compounds (aromatic) can be similarly reacted as can organo-chloro compounds (aliphatic).

The introduction of a magnesium oxide or calcium oxide bed at an elevated temperature subsequent to the magnesium oxide or calcium oxide stage in order to decompose hydride gases by a combination of thermal and chemical reaction has also been found to be useful.

## Claims

1. A method treating effluent gases from an industrial process which includes exposing the gases in sequential order to:
a first reaction stage comprising a magnesium or calcium material consisting of an oxide, carbonate or hydroxide, or a mixture thereof, and
a second reaction stage comprising a silicon material in the form of silicon or a silicon rich alloy or substances at an elevated temperature.

2. A method as claimed in Claim 1, wherein the silicon material includes or is constituted by a ferro silicon alloy, manganese silicon alloy or commercially pure silicon.

3. A method according to Claim 1 or Claim 2 in which the magnesium or calcium material is at an elevated temperature.

4. A method according to Claim 3 in which the magnesium or calcium material is at a temperature in the range of 450 to 600°C.

5. A method according to Claim 4 in which the silicon material is at a temperature in the range of 300 to 900°C.

6. A method according to Claim 5 in which the silicon material is at a temperature in the range of 450 to 550°C.

7. A method according to any preceding claim in which the gases are exposed to the silicon material in the presence of oxygen.

8. A method according to any preceding claim in which the gases are reacted with magnesium oxide or calcium oxide after they have been exposed to the silicon material.

9. A method according to any preceding claim in which the gases are further treated by means of wet scrubbers.

10. A method according to any preceding claim in which the effluent gases include one or more of a chlorocarbon, a chloroflurocarbon, an organo-halogen compound or an organo-sulphur compound.

## Patentansprüche

1. Verfahren zur Behandlung von Abfallgasprodukten aus einem industriellen Prozeß, bei welchem die Gase der Reihe nach zusammengebracht werden mit:
einer ersten Reaktionsstufe, die ein Magnesium- oder Kalziummaterial enthält, das aus einem Oxyd, Karbonat oder Hydroxyd oder einem Gemisch hiervon besteht, und
einer zweiten Reaktionsstufe, die ein Siliziummaterial in Form von Silizium oder einer siliziumreichen Legierung oder siliziumreichen Substanzen bei erhöhter Temperatur enthält.

2. Verfahren nach Anspruch 1, wobei das Siliziummaterial eine Ferro-Silizium-Legierung, eine Mangan-Silizium-Legierung oder handelsüblich reines Silizium enthält oder daraus besteht.

3. Verfahren nach Anspruch 1 oder 2, wobei das Magnesium- oder Kalziummaterial sich auf erhöhter Temperatur befindet.

4. Verfahren nach Anspruch 3, wobei das Magnesium- oder Kalziummaterial sich auf einer Temperatur im Bereich von 450 bis 600°C befindet.

5. Verfahren nach Anspruch 4, wobei das Siliziummaterial sich auf einer Temperatur im Bereich von 300 bis 900°C befindet.

6. Verfahren nach Anspruch 5, wobei sich das Siliziummaterial auf einer Temperatur im Bereich von 450 bis 550°C befindet.

7. Verfahren nach einem der vorhergehenden Ansprüche, wobei die Gase in Anwesenheit von Sauerstoff mit dem Siliziummaterial zusammengebracht werden.

8. Verfahren nach einem der vorhergehenden Ansprüche, wobei die Gase mit Magnesiumoxyd oder Kalziumoxyd reagiert werden, nachdem sie mit dem Siliziummaterial zusammengebracht worden sind.

9. Verfahren nach einem der vorhergehenden Ansprüche, wobei die Gase außerdem mittels eines Naßreinigers behandelt werden.

10. Verfahren nach einem der vorhergehenden Ansprüche, wobei die Abfallgasprodukte eine oder mehrere der Substanzen Chlorkohlenwasserstoffe, Chlorfluorkohlenwasserstoffe, Organo-halogen- oder Organoschwefelverbindungen enthalten.

## Revendications

1. Procédé pour traiter des gaz provenant d'un procédé industriel, ce procédé comprenant l'exposition des gaz, successivement, à :
une première étape ou un premier étage de réaction comprenant une matière dérivée du magnésium ou du calcium et consistant en un oxyde, un carbonate ou un hydroxyde, ou un de leurs mélanges, et
une seconde étape ou un second étage de réaction comprenant une matière à base de silicium, sous forme de silicium ou d'un alliage ou de substances riches en silicium, en opérant à une température élevée.

2. Procédé selon la revendication 1, dans lequel la matière à base de silicium comprend ou est constituée par un alliage de ferrosilicium, un alliage de manganèse-silicium ou du silicium de pureté commerciale.

3. Procédé selon la revendication 1 ou la revendication 2, dans lequel la matière à base de magnésium ou de calcium est à une température élevée.

4. Procédé selon la revendication 3, dans lequel la matière à base de magnésium ou de calcium est à une température comprise entre 450 et 600 °C.

5. Procédé selon la revendication 4, dans lequel la matière à base de silicium est à une température comprise entre 300 et 900 °C.

6. Procédé selon la revendication 5, dans lequel la matière à base de silicium est à une température comprise entre 450 et 550 °C.

7. Procédé selon l'une quelconque des revendications précédentes, dans lequel les gaz sont exposés à la matière à base de silicium, en présence d'oxygène.

8. Procédé selon l'une quelconque des revendications précédentes, dans lequel les gaz sont mis en réaction avec de l'oxyde de magnésium ou avec de l'oxyde de calcium après avoir été exposés à la matière à base de silicium.

9. Procédé selon l'une quelconque des revendications précédentes, dans lequel les gaz sont soumis à un traitement supplémentaire effectué à l'aide de laveurs ou épurateurs humides.

10. Procédé selon l'une quelconque des revendications précédentes, dans lequel les gaz effluents comprennent un ou plusieurs composés choisis parmi un chlorocarbone, un chlorofluorocarbone, un composé organo-halogéno ou un composé organique de soufre.
